## Europäisches Patentamt
## European Patent Office
## Office européen des brevets

(11) Publication number: **0 040 542**
**B1**

(12) **EUROPEAN PATENT SPECIFICATION**

(45) Date of publication of patent specification: **16.01.85**

(51) Int. Cl.⁴: **B 60 P 1/04, B 62 D 53/06**

(21) Application number: **81302217.5**

(22) Date of filing: **19.05.81**

(54) **Folding gooseneck trailer.**

(30) Priority: **21.05.80 GB 8016753**

(43) Date of publication of application:
**25.11.81 Bulletin 81/47**

(45) Publication of the grant of the patent:
**16.01.85 Bulletin 85/03**

(84) Designated Contracting States:
**DE FR GB NL**

(56) References cited:
**EP-A-0 010 985**
**US-A-3 756 443**
**US-A-4 078 684**
**US-A-4 103 793**

(73) Proprietor: **Richardson, Melvyn**
**The Old Gas Works Belfield Street**
**Ilkeston Derbyshire (GB)**

(72) Inventor: **Richardson, Melvyn**
**The Old Gas Works Belfield Street**
**Ilkeston Derbyshire (GB)**

(74) Representative: **Paget, Hugh Charles Edward et al**
**MEWBURN ELLIS & CO. 2/3 Cursitor Street**
**London EC4A 1BQ (GB)**

Courier Press, Leamington Spa, England.

## Description

The invention relates to folding gooseneck trailers according to the pre-characterising part of Claim 1 and has for its object to provide an improvement therein.

A folding gooseneck trailer is a trailer with a low load-carrying platform or bed with a raised so-called gooseneck structure at the front end, and a raised structure at the rear over the rear wheels. The gooseneck structure at the front end can be articulated by means of a so-called fifth wheel mechanism to a tractor unit. It is also foldable, that is to say capable of adjustment into a co-planar or substantially co-planar position with respect to the load-carrying platform or bed.

A folding gooseneck trailer is very useful for the loading and transport of heavy construction plant for example, that is to say self-propelled dumper trucks, tractors, loaders and the like as well as other self-propelled units such as cranes. This is because the load-carrying body or bed can be lowered so that its front end rests upon the ground with the foldable gooseneck lowered to the ground and extending forwardly from the load-carrying body or bed, and forming also a ramp up which the item of heavy equipment can be driven. When the item of equipment concerned has been loaded onto the load-carrying body, the gooseneck part can be returned to its normal position so that a tractor unit can be coupled to it and the tractor/trailer combination driven away.

There are a great many folding gooseneck trailers of various constructions in existence but in most cases the loading and unloading operation is time consuming and difficult. The forward end of the load-carrying platform or bed is usually provided with adjustable support means, that is to say screw operated jacks or hydraulically operated legs on which the forward end of the load-carrying platform or bed must be supported before the foldable gooseneck can be disconnected from the tractor unit and lowered. The operation of such jacks or legs is a particular problem in that it is time consuming and sometimes difficult, and the adjustment of the foldable gooseneck is frequently also time consuming and difficult.

A previous attempt to solve this problem is described in United States Patent Specification No. 4 078 684 in which a folding gooseneck connection comprises two longitudinally spaced-apart links each of which is pivotally connected at one end to the neck. The other end of the forward link is pivotally connected to the platform and the other end of the rearward link is connected to a piston rod of a ram and is slidable in slots formed in box-sections attached to the platform. The arrangement is such that movement of the lower end of the rearward link alters the geometry of the connection to rest the platform on the ground, permit removal of the tractor and thereafter permit the neck to pivot to the ground forming a ramp for loading the platform. However, that arrangement has the disadvantage that a complex box-section construction is required to permit the rear link to slide and the sliding motion causes substantial wear of the relatively slidable components. Furthermore, because the rear link is slidable, a large hole is required in the platform rearwardly of the rear link to permit the necessary amount of sliding and pivotal movement of the rear link. The hole is of particular significance when loading the trailer, since it prevents the loading of small vehicles unless a further plate or ramp is placed across the holes. A further disadvantage is that in the loading condition, illustrated in Figures 5 and 7 of said Specification, there is a large gap between the forward end of the platform and the rear end of the neck. Again, the gap prevents loading of small vehicles unless an additional plate or ramp is used to cover the gap. The large gap is created because of the geometry of the connection and the sliding movement of the rear link which prevents the rear end of the neck attaining a position close to the forward end of the platform. The arrangement is complicated and expensive to make.

In a further previous attempt to solve the particular problem referred to, and which is described in the European Patent Application published under No. 0010985, a folding gooseneck connection again comprises longitudinally spaced-apart links, the arrangement again being such that movement of the lower end of the rearward link alters the geometry of the connection to rest the platform on the ground, permitting removal of the tractor unit and thereafter permitting the neck to be lowered to the ground to form a ramp for loading the platform. However, in this case, the lower end of the rearward link is pivotally connected to a part which is pivotally mounted within the platform and which can be pivoted, under the control of a hydraulic ram, to move the position of the lower end of the rearward link. Although this further previous attempt to solve the problem referred to has obviated the need for sliding movement of the lower end of the rearward link, the arrangement is still complicated and expensive to make.

The invention as claimed is intended to provide a remedy. It solves in a particularly simple way the problem of how to design a folding gooseneck trailer in a manner which obviates the need for jacks or legs on which the forward end of the load-carrying platform or bed must be supported before the foldable gooseneck can be disconnected from the tractor unit and lowered, and it does so in the manner described in the characterising part of claim 1.

The advantages offered by the invention are mainly that the trailer construction is relatively simple and therefore inexpensive to make.

In order that the invention may be fully understood and readily carried into effect, embodiments will now be described, by way of example only, with reference to the accompanying drawings, of which:—

Figure 1 is a diagrammatic side view of a folding gooseneck trailer embodying the invention, shown in its normal road running condition;

Figure 2 is a view similar to Figure 1 but showing the trailer in a condition allowing the connection and disconnection of a conventional tractor unit;

Figure 3 is a view showing the trailer in a condition for the loading and unloading of heavy plant;

Figure 4 is a view similar to Figure 1 but showing the trailer in a condition facilitating the negotiation of a hump-backed bridge; and

Figure 5 is a slightly enlarged view, which will be referred to when describing a possible modification.

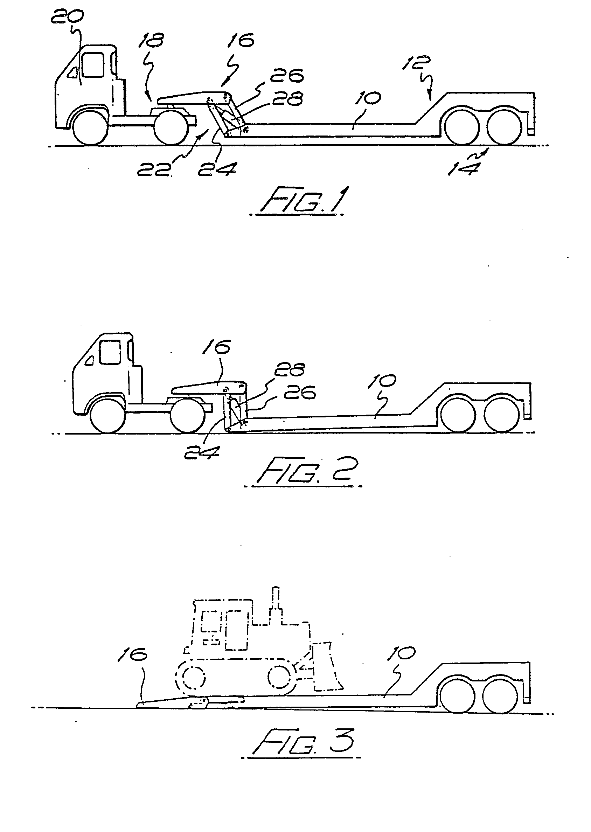

Referring now to Figure 1 of the drawings, the folding gooseneck trailer there illustrated has a load-carrying platform or bed 10, with gooseneck structures at both ends, that is to say a rearmost gooseneck structure 12, which is fixed relative to said platform or bed, for connection to a set of rear wheels generally indicated 14, and a forwardly extending gooseneck structure 16 which by means of a so-called fifth wheel mechanism generally indicated 18 is capable of articulated connection to a conventional tractor unit 20.

The forwardly extending gooseneck structure 16 is connected by means of a parallelogram linkage 22 to the load-carrying platform or bed 10, that is to say by means of equal length links 24 and 26 pivotally connected at their opposite ends to the gooseneck structure 16 and to said platform or bed. A double acting hydraulic ram 28 is shown to be located between the structure 16 and said platform or bed, a lower end of the ram being shown to be pivotally connected about the pivotal connection for the lower end of the link 26 and an upper end of said ram being shown to be pivotally connected about the pivotal connection for the upper end of the link 24. By the appropriate control of the hydraulic ram the location of the links 24 and 26 in relation to the load-carrying platform or bed can be adjusted.

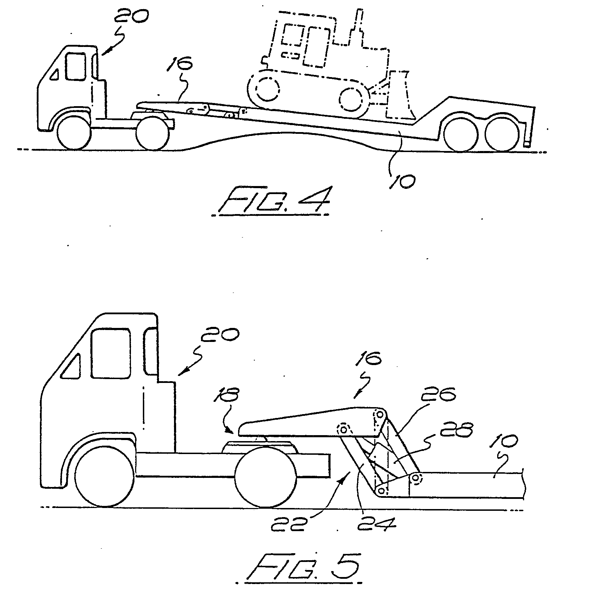

Referring now to Figure 2, it will be seen that the links 24 and 26 are of such a length that the front end of the load-carrying platform or bed can be lowered to rest upon the ground by said links being brought to a vertical or near vertical position relative to said platform or bed. When the load-carrying platform or bed has been brought to this position, the tractor unit can be disconnected and driven away from the trailer, whereupon the forwardly extending gooseneck structure can be lowered into co-planar or substantially co-planar relation with said platform or bed and rests upon the ground as shown in Figure 3. In this position, the structure 16 forms a ramp up which items of equipment which are to be transported by the trailer can be driven, that is to say items of earth moving equipment for example or a self-propelled crane. When the platform or bed has been loaded, the structure 16 can be brought back to the raised position in which it is shown in Figure 2 and the tractor unit can then be re-connected thereto. When reconnected to the tractor unit, the trailer can be brought back to a normal travelling condition, that is to say the front end of the load-carrying platform or bed can be brought back to its previously raised substantially horizontal position, by operating the hydraulic ram to bring the links to an appropriately inclined position relative to said platform or bed. It will be appreciated that each pivot is at a fixed point on the link 24 or 26 and at a fixed point on the bed 10 or gooseneck structure 16.

Thus there is provided a folding gooseneck trailer which can be loaded and unloaded with a minimum amount of trouble and inconvenience. Since it is devoid of the usual jacks or legs at the front end of the load-carrying platform or bed which usually need to be lowered to take the load off the tractor unit before the latter can be disconnected the operation of loading or unloading can be carried out very quickly. A further advantage is that if greater ground clearance is required to clear an obstacle, for example, a humped back bridge, the hydraulic ram 28 can be extended so that the links 24 and 26 are very much more inclined, even to the extent of making the gooseneck structure substantially co-planar with the bed 10 and temporarily lift the front end of the load-carrying platform or bed 10 higher from the ground, as shown in Figure 4.

It will of course be understood that the hydraulic ram is under constant compression when the platform or bed has been lifted from the ground. However, the hydraulic ram is a very high duty component so that it is thought that this fact will not be a safety hazard. If it was desired to relieve the hydraulic ram of all load during road travel, it would be a very simple matter to make a small modification, that is to say to arrange for a solid link (that is to say an inextensible link) of substantially the same length as the hydraulic ram is shown to be in Figure 1, to be placed in position between those same two pivot points (or if preferred between the two other pivot points as shown in chain-dotted lines in Figure 5). The hydraulic ram 28 would then only be used when loading or unloading.

It will of course be understood that for the sake of clarity the trailer has been illustrated only in side view and described as if the parallelogram linkage was constituted by simple links 24 and 26 under the control of a single hydraulic ram 28. In practice, the linkage will include links of substantial width and at least one of the links 24 and 26 may be constituted by two or more link elements spaced apart laterally of the trailer platform or bed so that the folding gooseneck has substantial lateral rigidity relative to said platform or bed. Similarly, a plurality of hydraulic rams may be provided for bringing the links to the required position relative to the load-carrying platform or bed. For example, there could be one each of links 24 and 26 at each side of the trailer, each being of substantial width, with a ram 28 at each side also, but inboard of the links 24 and 26.

Various other modifications could be made without departing from the scope of the invention. For example, although the linkage illustrated in the drawing is a truly parallelogram linkage, a quadrilateral linkage could be employed which is not a true parallelogram but only substantially so.

## Claims

1. A folding gooseneck trailer which is provided with a forwardly extending gooseneck structure (16) by means of which it can be connected to a tractor unit (20), said gooseneck structure being connected by means of longitudinally spaced apart links (24, 26) to a load-carrying platform or bed (10), and adjustment means being provided whereby the load-carrying platform or bed can be caused to rest upon the ground, permitting removal of the tractor unit and thereafter permitting the neck to be lowered to the ground to form a ramp for loading the platform or bed, characterised in that the links form a parallelogram or substantially parallelogram linkage (22) and are of such a length that, with said forwardly extending gooseneck structure (16) connected to a conventional tractor unit (20) for articulated movement therewith, the front end of said load-carrying platform or bed can be lowered to rest upon the ground by said links (24, 26) being brought to a vertical or near vertical position relative to said platform or bed (10), whereupon the tractor unit (20) can be disconnected to allow the forwardly extending gooseneck structure (16) to be lowered into co-planar or substantially co-planar relation with said platform or bed (10) and so that when re-connected to the tractor unit (20) the trailer can be brought to a normal travelling condition, that is to say the front end of the load-carrying platform or bed (10) can be brought back to its previously raised position, by bringing the links (24, 26) to an appropriately inclined position, relative to said platform or bed (10), by the operation of at least one hydraulic ram (28) pivotally connected at one end at the pivot point by which the rearward one of the links of the linkage (22) is pivotally connected to the load-carrying platform or bed (10) and pivotally connected at its other end at the pivot point by which the foremost link of the linkage (22) is pivotally connected to the forwardly extending gooseneck structure (16).

2. A folding gooseneck trailer according to claim 1, further characterised in that it is provided with a solid link capable of being placed in position between a pair of pivot points, that is to say a pivot point for one of the links of the linkage (22) on the load-carrying platform or bed (10) and a pivot point for the other link of the linkage (22) on the forwardly extending gooseneck structure (16), said solid link being fitted to the trailer when it is desired to relieve the force exerting means of all load during road travel.

## Revendications

1. Une remorque à col de cygne repliable qui est pourvue d'une structure en col de cygne 16 s'étendant vers l'avant au moyen de laquelle elle peut être accouplée à une unité tractrice 20, ladite structure en col de cygne étant reliée au moyen d'éléments de liaison 24, 26 espacés longitudinalement à une plateforme ou table porte-charges 10, et des moyens de réglage étant prévus au moyen desquels on peut faire reposer la plateforme ou table porte-charges sur le sol, en permettant ainsi l'enlèvement de l'unité tractrice et en permettant ensuite d'abaisser le col jusqu'au sol de manière à former une rampe pour le chargement sur la plateforme ou table, caractérisée en ce que les éléments de liaison forment un parallélograme, ou sensiblement un parallélograme, articulé 22 et sont de longueur telle que, ladite structure en col de cygne 16 s'étendant vers l'avant étant accouplée à une unité tractrice classique 20 pour son mouvement articulé avec celle-ci, l'extrémité avant de ladite plateforme ou table porte-charges peut être abaissée de manière à venir reposer sur le sol en mettant lesdits éléments de liaison 24, 26 en position verticale ou sensiblement verticale relativement à ladite plateforme ou table 10, après quoi l'unité tractrice 20 peut être désaccouplée de manière que la structure en col de cygne 16 s'étendant vers l'avant puisse être abaissée en position coplanaire ou sensiblement coplanaire relativement à ladite plateforme ou table 10 et de sorte que, une fois réaccouplée à l'unité tractrice 20, la remorque puisse être ramenée à son état normal de déplacement, autrement dit, que l'extrémité avant de la plateforme ou table porte-charges 10 puisse être ramenée à sa position surélevée précédente, en mettant les éléments de liaison 24, 26 dans une position inclinée appropriée par rapport à ladite plateforme ou table 10, par la mise en fonctionnement d'au moins un vérin hydraulique 28 articulé, à l'une de ses extrémités, au point d'articulation par lequel l'élément de liaison arrière du mécanisme articulé 22 est articulé à la plateforme ou table porte-charges 10, et articulé, à son autre extrémité, au point d'articulation par lequel l'élément de liaison avant du mécanisme articulé 22 est articulé à la structure en col de cygne 16 s'étendant vers l'avant.

2. Une remorque en col de cygne repliable suivant la revendication 1, caractérisée en ce qu'elle comporte un élément de liaison monobloc susceptible d'être placé en position entre une paire de points d'articulation, c'est-à-dire un point d'articulation de l'un des éléments de liaison de mécanisme articulé 22 à la plateforme ou table porte-charges 10 et un point d'articulation de l'autre élément de liaison du mécanisme articulé 22 à la structure en col de cygne 16 s'étendant vers l'avant, ledit élément de liaison monobloc étant monté sur le remorque lorsque l'on désire libérer de toute charge le moyen d'application de force pendant le déplacement sur route.

**Patentansprüche**

1. Faltbarer Schwanenhals-Sattelauflieger, der mit einem nach vorne ragenden Schwanenhals (16) versehen ist, mit dessen Hilfe er mit einer Zugmaschine (20) verbindbar ist, wobei der Schwanenhals mittels im Längsabstand voneinander angeordneter Gelenkhebel (24, 26) mit einer lasttragenden Plattform oder einem Bett (10) verbunden ist, und wobei eine Einstelleinrichtung vorgesehen ist, wodurch die lasttragende Plattform oder das Bett auf dem Untergrund absetzbar ist, die Zugmaschine abkuppelbar ist und der Schwanenhals sodann auf den Untergrund absenkbar ist, um eine Rampe zum Beladen der Plattform oder des Bettes zu bilden, dadurch gekennzeichnet, daß die Gelenkhebel ein Parallelogramm oder ein Parallelogrammgelenkgestänge (22) bilden und eine solche Länge aufweisen, daß wenn der nach vorne ragende Schwanenhals (16) mit einer herkömmlichen Zugmaschine (20) schwenkbar verbunden ist, das vordere Ende der lasttragenden Plattform oder des Bettes auf den Untergrund absenkbar ist, wobei die Gelenkhebel (24, 26) in eine vertikale oder nahezu vertikale Position relativ zu der Plattform oder dem Bett (10) gebracht werden, woraufhin die Zugmaschine (20) abgekoppelt werden kann, um den nach vorne ragenden Schwanenhals (16) in eine flächenbündige oder nahezu flächenbündige Lage in Bezug auf die Plattform oder das Bett (10) abzusenken, und daß der Auflieger nach Wiederankuppeln an die Zugmaschine (20) in eine normale Fahrstellung gebracht werden kann, d.h., daß das vordere Ende der lasttragenden Plattform oder des Bettes (10) in die ursprüngliche angehobene Stellung zurückführbar ist, indem die Gelenkhebel (24, 26) in eine entsprechend geneigte Stellung in Bezug auf die Plattform oder das Bett (10) gebracht werden durch die Betätigung mindestens eines hydraulischen Zylinder-Kolbenaggregats (28), das an seinem einen Ende mit dem Anlenkpunkt gelenkig verbunden ist, an dem der hintere Hebel des Hebelgelenks (22) mit der lasttragenden Plattform oder dem Bett (10) schwenkbar verbunden ist, und das an seinem anderen Ende mit dem Anlenkpunkt schwenkbar verbunden ist, an dem der vordere Hebel des Hebelgelenks (22) mit dem nach vorne ragenden Schwanenhals (16) schwenkbar verbunden ist.

2. Faltbarer Schwanenhals-Sattelauflieger nach Anspruch 1, gekennzeichnet durch einen starren Hebel, der zwischen zwei Anlenkpunkten anbringbar ist, d.h. einem Anlenkpunkt für einen der Hebel des Hebelgelenks (22) an der lasttragenden Plattform oder dem Bett (10) und einem Anlenkpunkt für den anderen Hebel des Hebelgelenks (22) an dem nach vorne ragenden Schwanenhals (16), wobei der starre Hebel mit dem Auflieger verbindbar ist, wenn alle lastübertragenden Einrichtungen während der Fahrt vollständig entlastet werden sollen.

0 040 542

FIG.1

FIG. 2

FIG. 3

1

_FIG. 4_

_FIG. 5_